# EUROPÄISCHE PATENTANMELDUNG

(11) **EP 2 194 320 A1**
(43) Veröffentlichungstag der Anmeldung: **09.06.2010**
(21) Anmeldenummer: 08010726.1
(22) Anmeldetag: 12.06.2008
(51) Int. Cl.: F22B 35/10

(54) **Verfahren zum Betreiben eines Durchlaufdampferzeugers sowie Zwangdurchlaufdampferzeuger**

(71) Anmelder: SIEMENS AKTIENGESELLSCHAFT, 80333 München (DE)
(72) Erfinder: Brückner, Jan, 91080 Uttenreuth (DE); Franke, Joachim, Dr., 90518 Altdorf (DE); Thomas, Frank, 91056 Erlangen (DE)

(57) **Zusammenfassung**

Bei einem Verfahren zum Betreiben eines Durchlaufdampferzeugers mit einer Verdampferheizfläche (4), bei dem einer Vorrichtung zum Einstellen des Speisewassermassenstroms (*Ṁ*) ein Sollwert (*Ṁ*ₛ) für den Speisewassermassenstrom (*Ṁ*) zugeführt wird, soll die Qualität einer prädiktiven Speisewasser- oder Massenstromregelung noch weiter verbessert und insbesondere bei auftretenden Laständerungen die Enthalpie des Strömungsmediums am Verdampferaustritt besonders stabil gehalten werden. Dazu wird erfindungsgemäß bei der Erstellung des Sollwerts (*Ṁ*ₛ) für den Speisewassermassenstrom (*Ṁ*) ein für die zeitliche Ableitung der Enthalpie oder der Dichte des Strömungsmediums am Eingang einer oder mehrerer der Heizflächen (2, 4) charakteristischer Korrekturwert (K) berücksichtigt.

## Beschreibung

Die Erfindung betrifft ein Verfahren zum Betreiben eines Durchlaufdampferzeugers mit einer Anzahl von Heizflächen, bei dem einer Vorrichtung zum Einstellen des Speisewassermassenstroms *Ṁ* ein Sollwert *Ṁ*ₛ für den Speisewassermassenstrom *Ṁ* zugeführt wird. Sie bezieht sich weiterhin auf einen Zwangdurchlaufdampferzeuger zur Durchführung des Verfahrens.

In einem Durchlaufdampferzeuger führt die Beheizung einer Anzahl von Dampferzeugerrohren, die zusammen eine Verdampferheizfläche bilden, zu einer vollständigen Verdampfung eines Strömungsmediums in den Dampferzeugerrohren in einem Durchgang. Das Strömungsmedium - üblicherweise Wasser - wird dabei in der Regel vor seiner Verdampfung einem der Verdampferheizfläche strömungsmediumsseitig vorgeschalteten Vorwärmer, üblicherweise auch als Economizer bezeichnet, zugeführt und dort vorgewärmt.

Abhängig vom Betriebszustand des Durchlaufdampferzeugers und damit zusammenhängend von der aktuellen Dampferzeugerleistung wird der Speisewassermassenstrom in die Verdampferheizfläche geregelt. Bei Laständerungen sollte der Verdampferdurchfluss möglichst synchron zum Wärmeeintrag in die Verdampferheizfläche geändert werden, weil sonst eine Abweichung der spezifischen Enthalpie des Strömungsmediums am Austritt der Verdampferheizfläche vom Sollwert nicht sicher vermieden werden kann. Eine solche unerwünschte Abweichung der spezifischen Enthalpie erschwert die Regelung der Temperatur des aus dem Dampferzeuger austretenden Frischdampfes und führt darüber hinaus zu hohen Materialbelastungen und somit zu einer reduzierten Lebensdauer des Dampferzeugers.

Um Abweichungen der spezifischen Enthalpie vom Sollwert und daraus resultierende unerwünscht große Temperaturschwankungen in allen Betriebszuständen des Dampferzeugers, also insbesondere auch in transienten Zuständen oder bei Lastwechseln, möglichst gering zu halten, kann die Speisewasserdurchflussregelung in der Art einer so genannten prädiktiven oder vorausschauenden Auslegung ausgestaltet sein. Dabei sollen insbesondere auch bei Lastwechseln die notwendigen Speisewassersollwerte in Abhängigkeit vom aktuellen oder für die nächste Zukunft zu erwartenden Betriebszustand bereitgestellt werden.

Aus der EP 0639 253 ist ein Durchlaufdampferzeuger bekannt, bei dem der Speisewasserdurchfluss über eine Vorausberechnung der benötigten Speisewassermenge geregelt wird. Als Grundlage für das Berechnungsverfahren dient dabei die Wärmestrombilanz der Verdampferheizfläche, in die der Speisewassermassenstrom insbesondere am Eintritt der Verdampferheizfläche eingehen sollte. Der Sollwert für den Speisewassermassentrom wird dabei aus dem Verhältnis aus dem aktuell in der Verdampferheizfläche vom Heizgas auf das Strömungsmedium übertragenen Wärmestrom einerseits und einer im Hinblick auf den gewünschten Frischdampfzustand vorgegebenen Soll-Enthalpieerhöhung des Strömungsmediums in der Verdampferheizfläche andererseits vorgegeben.

In der Praxis erweist sich die Messung des Speisewassermassenstroms unmittelbar am Eintritt der Verdampferheizfläche jedoch als technisch aufwendig und nicht in jedem Betriebszustand zuverlässig durchführbar. Statt dessen wird ersatzweise der Speisewassermassenstrom am Eintritt des Vorwärmers gemessen und in die Berechnungen der Speisewassermenge einbezogen, der jedoch nicht in jedem Fall gleich dem Speisewassermassenstrom am Eintritt der Verdampferheizfläche ist.

Um den hierdurch bedingten Ungenauigkeiten bei der Vorgabe eines insbesondere bei Lastwechseln besonders bedarfsgerechten Sollwerts für den Speisewassermassenstrom zu begegnen, ist bei einem alternativen Konzept einer prädiktiven Massenstromregelung, wie es aus der WO 2006/005708 A1 bekannt ist, vorgesehen, als eine der Eingangsgrößen für die Speisewasserdurchflussregelung die Speisewasserdichte am Eintritt des Vorwärmers zu berücksichtigen.

Beide genannten Konzepte für eine prädiktive Massenstromregelung basieren als wesentliche Eingangsgröße auf dem Sollwert für die Dampferzeugerleistung, aus dem anhand hinterlegter Korrelationen und insbesondere unter Rückgriff auf zuvor gewonnene Eich- oder Referenzmessungen die in die eigentliche Sollwertbestimmung einfließenden Kennwerte errechnet werden. Dies setzt jedoch ausreichend stabile und eindeutig auf eine Feuerungsleistung zurückführbare Systemeigenschaften insgesamt voraus, wie sie üblicherweise bei gefeuerten Dampferzeugern vorliegen. In anderen Systemen, wie beispielsweise bei einer Auslegung des Durchlaufdampferzeugers als Abhitzekessel zur Wärmerückgewinnung aus dem Rauchgas einer vorgeschalteten Gasturbine, liegen derartige Verhältnisse jedoch nicht vor. Zudem ist bei derartigen, als Abhitzekessel geschalteten Systemen eine Feuerungsleistung nicht im selben Maße als freier Parameter nutzbar wie bei direkt gefeuerten Kesseln, da bei einer Verschaltung als Abhitzekessel üblicherweise als primäres Kriterium zur Steuerung der Gesamtanlage der Betrieb der Gasturbine angesehen wird, an deren Systemzustand die anderen Komponenten angepasst werden.

Um dieser Erkenntnis Rechnung zu tragen, ist aus der nicht vorveröffentlichten EP 07 023 081 eine weiter verbesserte prädiktive Massenstromreglung für einen Abhitze-Durchlaufdampferzeuger bekannt. Deren Konzept sieht eine vorgesteuerte Berechnung der Speisewassermenge über eine Wärmestrombilanzierung des Verdampfers, vorzugsweise einschließlich der rauchgasseitig vorgeschalteten Überhitzerheizflächen, vor. Damit kann unter günstigen Bedingungen für das rauchgasseitig vorliegende Wärmeangebot immer ein an den Bedarf angepasster Verdampferdurchfluss eingestellt werden. Für kleinere Korrekturen des Speisewassermassenstroms ist dabei ein überlagerter und langsam wirkender Enthalpieregler vorgesehen.

Der Erfindung liegt nunmehr die Aufgabe zugrunde, ein Verfahren zum Betreiben eines Dampferzeugers der oben genannten Art anzugeben, mit dem die Qualität einer prädiktiven Speisewasser- oder Massenstromregelung noch weiter verbessert und insbesondere bei auftretenden Laständerungen die Enthalpie des Strömungsmediums am Verdampferaustritt besonders stabil gehalten werden kann. Dabei soll insbesondere das Konzept aus der ... noch weiter verbessert werden, deren Offenbarung ausdrücklich miteinbezogen wird ("incorporation by reference"). Des Weiteren soll ein für die Durchführung des Verfahrens besonders geeigneter Zwangdurchlaufdampferzeuger angegeben werden.

Bezüglich des Verfahrens wird diese Aufgabe erfindungsgemäß gelöst, indem bei der Erstellung des Sollwerts für den Speisewassermassenstrom ein für die zeitliche Ableitung der Enthalpie oder der Dichte des Strömungsmediums am Eingang einer oder mehrerer der Heizflächen charakteristischer Korrekturwert berücksichtigt wird.

Die Erfindung geht dabei von der Überlegung aus, dass die bestehenden Konzepte für eine prädiktive Massenstromregelung eines Durchlaufdampferzeugers hinsichtlich der Ansteuerqualität bei der Einstellung des Speisewassermassenstroms noch weiter verbessert werden können, indem konsequent als einschlägig erkannte Korrekturwerte bei der Ermittlung eines geeigneten Sollwerts für den Speisewassermassenstrom mitberücksichtigt werden. Gerade bei Lastwechseln oder sonstigen transienten Vorgängen beim Betrieb des Durchlaufdampferzeugers sollte dabei berücksichtigt werden, dass sich bei derartigen Vorgängen das spezifische Volumen des Strömungsmediums ändern kann. Aus dieser spezifischen Volumenänderung des Strömungsmediums, beispielsweise infolge von Temperaturänderungen, resultieren temporär oder vorübergehend fluid- oder strömungsmediumsseitige Ein- oder Ausspeichereffekte in bzw. aus den entsprechenden Heizflächen des Dampferzeugers. Derartige, auf Dichteänderungen des Fluids oder Strömungsmediums infolge von Temperaturveränderungen zurückgehende Speichereffekte bedingen Massenstromschwankungen am Ausgang der jeweiligen Heizflächen, so dass der von der jeweiligen Heizfläche abströmende Massenstrom nicht der gleiche wie der einströmende und insbesondere nicht der gleiche wie der von der Speisewasserpumpe geförderte Massenstrom ist. Unter derartigen Umständen laufen somit der Durchfluss durch die jeweilige Heizfläche und der von der Speisewasserpumpe geförderte Massenstrom nicht mehr synchron zueinander, so dass bei derartigen Umständen mit an sich unerwünschten mehr oder minder starken Enthalpieschwankungen am Verdampferaustritt zu rechnen ist. Um diesen Effekten im Sinne einer weiter verbesserten prädiktiven Massenstromregelung geeignet zu begegnen, sollten bei der Speisewasserregelung geeignete Korrekturterme zur Kompensation vorgesehen sein. Als besonders geeignetes Mittel ist hierzu die Erfassung von für die zeitliche Ableitung geeigneter Parameter wie insbesondere der Enthalpie oder der Dichte des Strömungsmediums am Eintritt der jeweiligen Heizfläche charakteristischen Kennwerten vorgesehen.

In vorteilhafter Ausgestaltung werden auf derartige Weise fluidseitige Ein- oder Ausspeichereffekte in einer Vorwärmerheizfläche des Durchlaufdampferzeugers ausgewertet. Gerade im Hinblick auf den üblicherweise vergleichsweise großen Inhalt an Wasser oder Strömungsmedium in den Vorwärmer- oder Economizerheizflächen in Abhitzedampferzeugern wirken sich nämlich Dichteänderungen des dort befindlichen Strömungsmediums vergleichsweise gravierend auf den Verdampferdurchfluss und somit auf die Verdampferaustrittsenthalpie aus, so dass eine geeignete Berücksichtigung und Kompensation dieses Effekts bei der Ermittlung eines geeigneten Sollwerts für den Speisewassermassenstrom besonders günstig ist.

Dabei wird der Korrekturwert, der bei der Ermittlung des Sollwerts für den Speisewassermassenstrom berücksichtigt werden soll, vorteilhafterweise durch Berücksichtigung von für die zeitliche Ableitung der Dichte des Strömungsmediums sowohl am Eingang als auch am Ausgang der jeweiligen Heizfläche erstellt. Dabei kann insbesondere durch geeignete Messungen von Temperatur und Druck am Eintritt und am Austritt der jeweiligen Vorwärmer- oder Economizerheizfläche eine mittlere Fluid- oder Mediumsdichte im Vorwärmer definiert und berechnet werden, wobei zweckmäßigerweise ein lineares Dichteprofil zugrundegelegt wird. Aus einer Änderung der solchermaßen bestimmten mittleren Dichte des Strömungsmediums im Vorwärmer kann sodann ein charakteristischer Kennwert für die fluidseitigen Ein- und Ausspeichereffekte ermittelt werden. Falls dabei beispielsweise bei einer Laständerung die Wärmezufuhr in die Vorwärmerheizfläche absinken sollte, so wird dort temporär Strömungsmedium eingespeichert. Bei konstantem Förderstrom der Speisewasserpumpe würde somit der Massenstrom beim Austritt der Vorwärmerheizfläche oder am Eintritt einer nachgeschalteten Verdampferheizfläche absinken. Durch ein entsprechendes Korrektursignal für den Sollwert des Speisewassermassenstroms wird zur Kompensation vorzugsweise der Förderstrom der Speisewassermassenpumpe temporär erhöht, so dass der Speisewassermassenstrom am Verdampfereintritt und somit resultierend auch die Enthalpie am Verdampferaustritt nahezu konstant gehalten werden kann.

Für eine geeignete Erfassung von Schwankungen des Verdampferdurchflusses, die durch fluidseitige Ein- und Ausspeichereffekte im Verdampfer selbst resultieren, ist hingegen zu berücksichtigen, dass üblicherweise im Verdampfer durch das parallele Auftreten von Wasser und Dampf in der Art eines Zweiphasengemisches aufgrund der daraus resultierenden starken Nichtlinearität der Gemischdichte in der Regel keine repräsentativ geeignete mittlere Dichte des Strömungsmediums definiert werden kann. Zudem muss im Verdampfer mit einer lokalen Verschiebung des Verdampfungsbeginns während transienter Vorgänge gerechnet werden, was eine geeignete Definition einer mittleren Dichte des Strömungsmediums zusätzlich erschwert.

Um dennoch auch im Bereich der eigentlichen Verdampferheizfläche geeignet auf mediumsseitige Ein- und Ausspeichervorgänge infolge transienter Vorgänge reagieren zu können, ist vorteilhafterweise vorgesehen, auch die Änderung der Verdampfereintrittsenthalpie bei der Bereitstellung des Korrekturwerts geeignet zu berücksichtigen. Dabei wird davon ausgegangen, dass bei einer Reduzierung der Enthalpie am Verdampfereintritt aufgrund der Abkühlung des Strömungsmediums Einspeichereffekte zu erwarten sind, die den Verdampferdurchfluss reduzieren und unmittelbar mit einem Anstieg der Verdampferaustrittsenthalpie verknüpft sind.

Die zur Erfassung der transienten Effekte vorgesehene Erfassung der zeitlichen Ableitung der Enthalpie oder der Dichte des Strömungsmediums wird vorteilhafterweise über ein geeignetes Differenzierglied vorgenommen, dem eingangsseitig geeignete Parameter oder Messwerte wie beispielsweise Temperatur und Druck des Strömungsmediums an der jeweiligen Messstelle zugeführt werden. Das Differenzierglied ist dabei vorteilhafterweise als so genanntes "Derivative-Element", auch bezeichnet als "DT1-Glied", ausgeführt. Seiner Charakteristik nach entspricht ein derartiges "Derivative-Element" einer regeltechnischen Funktionalität "1-Verzögerungsglied", wobei ein Verzögerungsglied seinerseits eine Charakteristik entsprechend "1-e^{-t/T}" aufweist. Dies resultiert insgesamt in einer Charakteristik des "Derivative-Elements" entsprechend einer abklingenden Exponentialfunktion.

Bei der Berücksichtigung von Ein- und Ausspeichereffekten in einer Vorwärmerheizfläche wird ein derartiges "DT1-Glied" vorteilhafterweise zur Auswertung des Verlaufs zur Auswertung des Verlaufs der Dichte (berechnet durch entsprechend gemessene Druck- und Temperaturwerte) am Ein- bzw. Austritt der Vorwärmerheizfläche verwendet. Das dabei generierte Korrektursignal für den Speisewassermassenstrom kann die fluidseitigen Speichereffekte in der Vorwärmerheizfläche dabei insbesondere dann besonders wirksam kompensieren, wenn eine geeignete Verstärkung und eine geeignete Zeitkonstante für das jeweilige "DT1-Glied" gewählt wird. Vorteilhafterweise wird dabei für die Verstärkung des "DT1-Glieds" das vollständige Medienvolumen der Vorwärmerheizfläche, also entsprechend dem totalen Wasserinhalt in der Vorwärmerheizfläche, und für die Zeitkonstante die halbe Durchlaufzeit des Strömungsmediums durch die Vorwärmerheizfläche gewählt. In besonders vorteilhafter Ausgestaltung kann dabei die Zeitkonstante entsprechend dem aktuellen Lastzustand des Durchlaufdampferzeugers angepasst werden, wobei zweckmäßigerweise der Umstand berücksichtigt wird, dass sich bei geringerer Last des Durchlaufdampferzeugers die Durchlaufzeit des Strömungsmediums durch die Vorwärmerheizfläche entsprechend erhöht.

In besonders vorteilhafter Weiterbildung wird der Sollwert für den Speisewassermassenstrom anhand des Verhältnisses aus dem aktuell in der Verdampferheizfläche vom Heizgas auf das Strömungsmedium übertragenen Wärmestrom einerseits und einer im Hinblick auf den gewünschten Frischdampfzustand vorgegebenen Soll-Enthalpieerhöhung des Strömungsmediums in der Verdampferheizfläche andererseits vorgegeben, wobei der vom Heizgas auf das Strömungsmedium übertragene Wärmestrom unter Berücksichtigung eines für die aktuelle Temperatur des Heizgases am Verdampferaustritt charakteristischen Temperaturkennwerts und eines für den aktuellen Massenstrom des Heizgases charakteristischen Massenstromkennwerts ermittelt wird.

Auf diese Weise ist eine besonders bedarfsgerechte, am Anlagen-Istzustand orientierte vorgesteuerte Berechnung der erforderlichen Speisewassermenge auf der Grundlage einer Wärmestrombilanzierung des Verdampfers, die gegebenenfalls optional auch nachfolgende Überhitzerheizflächen miteinbeziehen kann, ermöglicht. Der für die aktuelle Temperatur des Heizgases am Verdampfereintritt charakteristische Temperaturkennwert ermöglicht dabei insbesondere die Ermittlung eines besonders zuverlässigen und somit bedarfsgerechten Kennwerts für die Heizgasenthalpie am Verdampfereintritt unter Berücksichtigung der Heizgasenthalpie am Verdampferauslass, die ihrerseits anhand des für den aktuellen Massenstrom charakteristischen Massenstromkennwerts berechnet werden kann, und damit eine besonders zuverlässige und bedarfsgerechte Ermittlung des aktuellen Wärmeangebots- oder -übertrags vom Heizgas auf das Speisewasser. Aus dieser kann unter Berücksichtigung der vorgegebenen Soll-Enthalpieerhöhung, also insbesondere der Differenz zwischen der unter Berücksichtigung der gewünschten Frischdampfparameter ermittelten Soll-Enthalpie des Strömungsmediums am Verdampferaustritt und der aus geeigneten Messwerten wie beispielsweise Druck und Temperatur ermittelten Ist-Enthalpie am Verdampfereintritt, die gewünschte Soll-Enthalpieerhöhung des Strömungsmediums in der Verdampferheizfläche ermittelt werden, wobei aus dem Verhältnis dieser Größen ein hierzu geeigneter Sollwert für den Speisewassermassenstrom errechnet werden kann.

Als charakteristischer Temperaturkennwert und/oder als charakteristischer Massenstromkennwert zur geeigneten quantitativen Beschreibung des in den Verdampfer eintretenden Heizgases wird vorzugsweise ein für die aktuelle Situation besonders repräsentativer Kennwert berücksichtigt. Derartige Kennwerte können anhand aktuell vorliegender Messdaten geeignet ermittelt und insbesondere unter Rückgriff auf hinterlegte Speicherkennwerte geeignet bereitgestellt werden. Eine besonders zuverlässige Auswertung der Wärmestrombilanz und somit die Ermittlung eines besonders genau vorausberechneten Speisewasser-Sollwerts ist aber ermöglicht, indem vorteilhafterweise als charakteristischer Temperaturkennwert und/oder als charakteristischer Massenstromkennwert jeweils ein aktuell erfasster Messwert berücksichtigt wird.

Der vom Heizgas auf das Strömungsmedium übertragene Wärmestrom wird vorteilhafterweise anhand einer Wärmestrombilanz ermittelt, bei der als wesentliche Eingangsgröße die Enthalpiedifferenz des Heizgases zwischen Verdampfereintritt und Verdampferaustritt zugrunde gelegt wird. Für eine besonders zuverlässige Kennwertberechnung wird dabei in weiterer vorteilhafter Ausgestaltung aber auch noch berücksichtigt, dass die durch diese Enthalpiedifferenz wiedergegebene Senkung des Energieinhalts im Rauchgas beim Durchtritt durch die Verdampferheizfläche zwar einerseits zu einer Enthalpieerhöhung im Strömungsmedium innerhalb der Verdampferheizfläche, andererseits aber auch zu Energieein- und/oder Ausspeichereffekten in den Bauteilen des Verdampfers, also insbesondere in den Dampferzeugerrohren und sonstigen metallischen Komponenten, führen kann. Für eine besonders zuverlässige Ermittlung der tatsächlich auf das Strömungsmedium innerhalb der Verdampferheizfläche übertragenen Enthalpiedifferenz wird dieser Aspekt der Energieein- und/oder Ausspeicherung von Wärme in den Metallmassen geeignet als charakteristischer Korrekturwert berücksichtigt, um den die Enthalpiedifferenz des Heizgases geeignet modifiziert wird.

Bei der Ermittlung der Enthalpiedifferenz des Heizgases wird vorteilhafterweise die aktuelle Enthalpie des Heizgases am Verdampferaustritt berücksichtigt, indem sie anhand des Drucks des Strömungsmediums am Verdampfereintritt unter Berücksichtigung für den aktuellen Massenstrom des Heizgases charakteristischen Massenstromkennwerts ermittelt wird. Der Massenstromkennwert, der dabei vorzugsweise in Form eines Messwerts vorliegt, alternativ aber auch mittelbar über weitere Parameter unter Rückgriff auf hinterlegte Korrelations-oder sonstige Kennwerte errechnet werden kann, wird dabei vorteilhafterweise zunächst in den so genannten "Pinchpoint" des Dampferzeugers, also in die Temperaturdifferenz zwischen der Austrittstemperatur des Rauchgases und der Siedetemperatur des Strömungsmediums am Verdampfereintritt umgerechnet, wobei diese Temperaturdifferenz zweckmäßigerweise zu einer anhand des Drucks am Verdampfereintritt ermittelten Siedetemperatur des Strömungsmediums hinzuaddiert und aus dieser Summe die Enthalpie des Heizgases am Verdampferaustritt ermittelt wird.

Der Ermittlung der Soll-Enthalpieerhöhung des Strömungsmediums in der Verdampferheizfläche wird vorteilhafterweise einerseits anhand geeigneter Messwerte wie beispielsweise des Drucks und der Temperatur des Strömungsmediums beim Verdampfereintritt die ermittelte Ist-Enthalpie zugrunde gelegt. Zusätzlich wird in Abhängigkeit oder unter Berücksichtigung des gewünschten Dampfzustands, beispielsweise der spezifizierten Dampfparameter oder auch des-Dampfgehalts am Verdampferaustritt, unter Berücksichtigung des aktuellen Drucks des Strömungsmediums am Austritt der Verdampferheizfläche ein Sollwert für dessen Enthalpie am Verdampferaustritt vorgegeben.

Der Durchlaufdampferzeuger kann dabei in einem so genannten "Benson-Kontroll-Modus" betrieben werden. Dabei liegt zwar im Regelfall im "Benson-Kontroll-Modus" am Austritt der Verdampferheizfläche Überhitzung des Strömungsmediums vor. Es kann jedoch in diesem Modus die Überspeisung eines der Verdampferheizfläche nachgeschalteten Wasserspeichers in Kauf genommen und den nachfolgenden Heizflächen teilweise noch unverdampftes Strömungsmedium zugeführt werden, so dass erst in den nachfolgenden Heizflächen die vollständige Verdampfung des Strömungsmediums erfolgt. In einem derartigen Modus kann insbesondere als gewünschter Dampfparameter die Einstellung einer um eine vorgegebene Temperaturdifferenz von beispielsweise 35°C oberhalb der Sättigungstemperatur des Strömungsmediums liegenden Solltemperatur für das Strömungsmedium am Austritt des Verdampfers vorgegeben werden. Gerade bei einer derartigen Betriebsweise des Dampferzeugers kann es wünschenswert sein, den aktuellen Betriebszustand von der Verdampferheizfläche nachgeschalteten Überhitzerheizflächen zugeordneten Einspritzkühlern geeignet zu berücksichtigen, indem deren Kühlbedarf auf eine geeignete Mehrbespeisung des Systems mit Speisewasser verlagert wird. Dazu wird vorteilhafterweise bei der Vorgabe des Sollwerts für die Enthalpie des Strömungsmediums am Austritt der Verdampferheizfläche ein aktueller Kühlbedarf bei der Verdampferheizfläche nachgeschalteten Einspritzkühlern berücksichtigt. Die Soll-Frischdampf-Temperatur soll somit insbesondere so weit wie möglich durch eine geeignete Einstellung des Speisewasserstroms erreicht werden, so dass der zusätzliche Kühlbedarf bei den Einspritzkühlern besonders gering gehalten werden kann. Umgekehrt kann auch für den Fall, dass eine zu geringe Frischdampf-Temperatur festgestellt wird, der Enthalpie-Sollwert des Strömungsmediums am Verdampferaustritt geeignet erhöht werden, so dass eine entsprechend gering bemessene Speisewassermenge über den solchermaßen geänderten Sollwert für den Speisewassermassenstrom zugeführt wird.

Alternativ kann der Dampferzeuger auch in einem so genannten "Level Control Mode" betrieben werden, bei dem der Wasserstand in einem der Verdampferheizfläche nachgeschalteten Wasserspeicher variiert und nachgeregelt wird, wobei ein Überspeisen des Wasserspeichers möglichst vermieden werden sollte. Dabei wird der Wasserstand innerhalb des Wasserspeichers soweit möglich in einem vorgegebenen Sollbereich gehalten, wobei in vorteilhafter Ausgestaltung für den Sollwert für den Speisewassermassenstrom ein Füllstands-Korrekturwert berücksichtigt wird, der die Abweichung des Iststands des Füllstands im Wasserspeicher von einem zugeordneten Sollwert charakterisiert.

Bezüglich des Zwangdurchlaufdampferzeugers wird die genannte Aufgabe gelöst, indem eine einer Vorrichtung zum Einstellen des Speisewassermassenstroms zugeordnete Speisewasserdurchflussregelung zur Vorgabe des Sollwerts für den Speisewassermassenstrom anhand des genannten Verfahrens ausgelegt ist. Der Zwangdurchlaufdampferzeuger ist dabei in besonders vorteilhafter Weise als Abhitzedampferzeuger ausgestaltet, der heizgasseitig mit dem Abgas aus einer zugeordneten Gasturbinenanlage beaufschlagt ist.

Die mit der Erfindung erzielten Vorteile bestehen insbesondere darin, dass durch die Berücksichtigung der zeitlichen Ableitung der Enthalpie oder der Dichte des Strömungsmediums am Eingang einer oder mehrerer der Heizflächen des Durchlaufdampferzeugers eine Korrektur des im Rahmen einer prädiktiven Massenstromregelung ermittelten Sollwerts für den Speisewassermassenstrom ermöglicht ist, bei der u. a. auch den fluid-oder strömungsmediumsseitigen Ein- oder Ausspeichervorgängen in den Heizflächen, insbesondere in den Vorwärmern, geeignet Rechnung getragen werden kann. Damit ist gerade bei auftretenden Lastwechseln oder sonstigen transienten Vorgängen, bei denen mit derartigen Ein- oder Ausspeichervorgängen gerechnet werden muss, eine qualitativ besonders hochwertige Ermittlung eines bedarfsgerechten Sollwerts für den Speisewassermassenstrom ermöglicht.

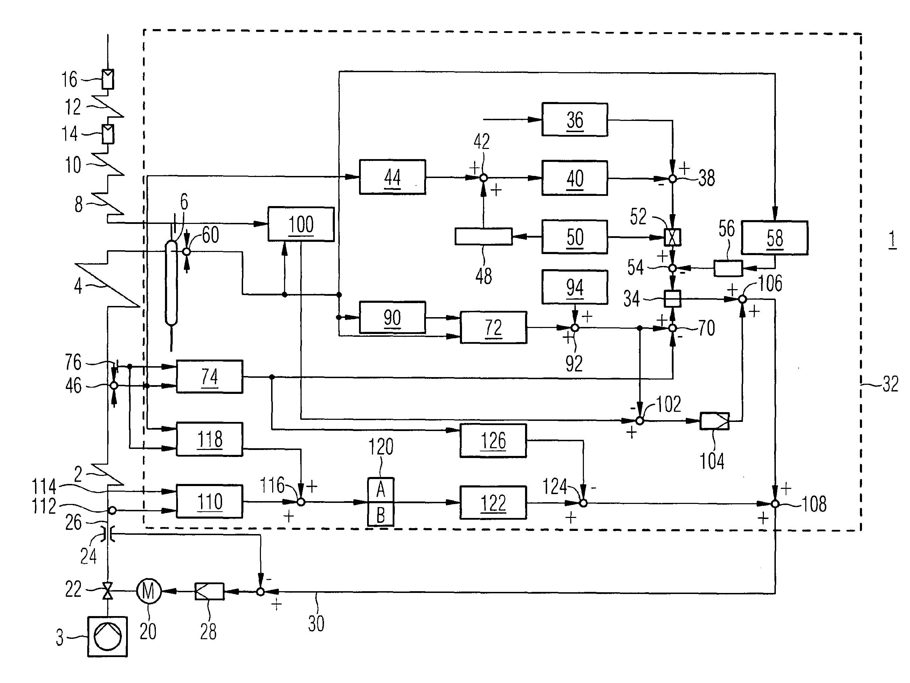

Ein Ausführungsbeispiel der Erfindung wird anhand einer Zeichnung näher erläutert. Darin zeigt die Figur schematisch einen Zwangdurchlaufdampferzeuger mit zugeordneter Speisewasserdurchflussregelung.

Der Zwangdurchlaufdampferzeuger 1 gemäß der FIG weist eine auch als Economizer bezeichnete Vorwärmerheizfläche 2 für als Strömungsmedium vorgesehenes Speisewasser auf, der sich in einem nicht näher dargestellten Gaszug befindet. Der Vorwärmerheizfläche 2 ist strömungsmediumsseitig eine Speisewasserpumpe 3 vor- und eine Verdampferheizfläche 4 nachgeschaltet. Ausgangsseitig ist die Verdampferheizfläche 4 strömungsmediumsseitig über einen Wasserspeicher 6, der insbesondere auch als Wasserabscheider oder Abscheideflasche ausgestaltet sein kann, mit einer Anzahl nachgeschalteter Überhitzerheizflächen 8, 10, 12 verbunden, die ihrerseits zur Anpassung der Dampftemperaturen und dergleichen mit Einspritzkühlern 14, 16 versehen sein können. Der Zwangdurchlaufdampferzeuger 1 ist als Abhitzekessel oder Abhitzedampferzeuger ausgestaltet, wobei die Heizflächen, also insbesondere die Vorwärmerheizfläche 2, die Verdampferheizfläche 4 sowie die Überhitzerheizflächen 8, 10, 12, in einem heizgasseitig mit dem Abgas aus einer zugeordneten Gasturbinenanlage beaufschlagten Heizgaskanal angeordnet sind.

Der Zwangdurchlaufdampferzeuger 1 ist für eine geregelte Beaufschlagung mit Speisewasser ausgelegt. Dazu ist der Speisewasserpumpe 3 ein von einem Stellmotor 20 angesteuertes Drosselventil 22 nachgeschaltet, so dass über geeignete Ansteuerung des Drosselventils 22 die von der Speisewasserpumpe 3 in Richtung des Vorwärmers 2 geförderte Speisewassermenge oder der Speisewassermassenstrom einstellbar ist. Zur Ermittlung eines aktuellen Kennwerts für den zugeführten Speisewassermassenstrom ist dem Drosselventil 22 eine Messeinrichtung 24 zur Ermittlung des Speisewassermassenstroms *Ṁ* durch die Speisewasserleitung nachgeschaltet. Der Stellmotor 20 ist über ein Regelelement 28 angesteuert, das eingangsseitig mit einem über eine Datenleitung 30 zugeführten Sollwert *Ṁ*ₛ für den Speisewassermassenstrom *Ṁ* und mit dem über eine Messeinrichtung 24 ermittelten aktuellen Istwert des Speisewassermassenstroms *Ṁ* beaufschlagt ist. Durch Differenzbildung zwischen diesen beiden Signalen wird an den Regler 28 ein Nachführungsbedarf übermittelt, so dass bei einer Abweichung des Ist- vom Sollwert eine entsprechende Nachführung des Drosselventils 22 über die Ansteuerung des Motors 20 erfolgt.

Zur Ermittlung eines besonders bedarfsgerechten Sollwerts *Ṁ*ₛ für den Speisewassermassenstrom *Ṁ* in der Art einer prädiktiven, vorausschauenden oder am zukünftigen oder aktuellen Bedarf orientierten Einstellung des Speisewassermassenstroms ist die Datenleitung 30 eingangsseitig mit einer zur Vorgabe des Sollwerts *Ṁ*ₛ für den Speisewassermassenstrom *Ṁ* ausgelegten Speisewasserdurchflussregelung 32 verbunden. Diese ist dafür ausgelegt, den Sollwert *Ṁ*ₛ für den Speisewassermassenstrom *Ṁ* anhand einer Wärmestrombilanz in der Verdampferheizfläche 4 zu ermitteln, wobei der Sollwert *Ṁ*ₛ für den Speisewassermassenstrom *Ṁ* anhand des Verhältnisses aus dem aktuell in der Verdampferheizfläche 4 vom Heizgas auf das Strömungsmedium übertragenen Wärmestrom einerseits und einer im Hinblick auf den gewünschten Frischdampfzustand vorgegebenen Soll-Enthalpieerhöhung des Strömungsmediums in der Verdampferheizfläche 4 andererseits vorgegeben wird. Eine Nutzung eines derartigen Konzepts der Bereitstellung eines Sollwerts für den Speisewassermassenstrom auf der Grundlage einer Wärmebilanz selbst für einen Zwangdurchlaufdampferzeuger 1 in Bauweise als Abhitzekessel ist im Ausführungsbeispiel insbesondere dadurch erreicht, dass der vom Heizgas auf das Strömungsmedium übertragene Wärmestrom unter Berücksichtigung eines für die aktuelle Temperatur des Heizgases am Verdampfereintritt charakteristischen Temperaturkennwerts und eines für den aktuellen Massenstrom des Heizgases charakteristischen Massenstromkennwerts ermittelt wird.

Dazu weist die Speisewasserdurchflussregelung 32 ein Dividierglied 34 auf, dem als Zähler ein geeigneter Kennwert für den aktuell in der Verdampferheizfläche 4 vom Heizgas auf das Strömungsmedium übertragenen Wärmestrom und als Nenner ein im Hinblick auf den gewünschten Frischdampfzustand geeignet vorgegebener Kennwert für die gewünschte Soll-Enthalpieerhöhung des Strömungsmediums in der Verdampferheizfläche 4 zugeführt wird. Zählerseitig ist das Dividierglied 34 dabei eingangsseitig mit einem Funktionsmodul 36 verbunden, das anhand eines zugeführten, für die aktuelle Temperatur des Heizgases am Verdampfereintritt charakteristischen Temperaturkennwerts als Ausgangswert einen Wert für die Enthalpie des Heizgases am Verdampfereintritt ausgibt. Im Ausführungsbeispiel ist dabei die Zuführung eines für die aktuelle Temperatur des Heizgases am Verdampfereintritt charakteristischen Messwerts als Temperaturkennwert vorgesehen. Der für die Enthalpie des Heizgases am Verdampfereinlass charakteristische Kennwert wird auf ein Subtrahierglied 38 ausgegeben, wo von diesem Kennwert ein von einem Funktionsmodul 40 gelieferter Kennwert für die Enthalpie des Gases am Verdampferauslass abgezogen wird.

Zur Ermittlung der Enthalpie des Heizgases am Verdampferauslass wird dem Funktionsglied 40 eingangsseitig die von einem Summierglied 42 gebildete Summe zweier Temperaturwerte zugeführt. Dabei wird einerseits die über ein Funktionsglied 44, das eingangsseitig mit einem Drucksensor 46 verbunden ist, anhand des Drucks des Strömungsmediums beim Verdampfereintritt ermittelte Sättigungstemperatur des Strömungsmediums berücksichtigt. Andererseits wird über ein Funktionsglied 48, dem seinerseits eingangsseitig über ein weiteres Funktionsglied 50 ein für den aktuellen Massenstrom des Heizgases charakteristischer Massenstromkennwert zugeführt wird, der so genannte "Pinchpoint", nämlich die aus dem Massenstrom des Heizgases ermittelte Temperaturdifferenz der Heizgastemperatur am Verdampferaustritt minus der Siedetemperatur des Strömungsmediums am Verdampfereintritt, berücksichtigt. Aus diesen beiden über das Summierglied 42 addierten Temperaturbeiträgen wird vom Funktionsbaustein 40 somit die Enthalpie des Heizgases am Verdampferaustritt, gegebenenfalls unter Rückgriff auf geeignete Tabellen, Diagramme oder dergleichen, bereitgestellt. Ausgangsseitig liefert das Subtrahierglied 38 somit die Enthalpiedifferenz oder -bilanz des Heizgases, also die Differenz aus Heizgasenthalpie am Verdampfereintritt und Heizgasenthalpie am Verdampferaustritt.

Diese Enthalpiedifferenz wird an ein Multiplizierglied 52 weitergegeben, dem der charakteristische Massenstromkennwert, der im Übrigen als aktuell erfasster Messwert vorliegen kann, ebenfalls zugeführt wird. Ausgangsseitig liefert das Multiplizierglied 52 somit einen Kennwert für die vom Rauchgas an die Verdampferheizfläche 4 abgegebene Wärmeleistung.

Um anhand dieser vom Heizgas abgegebenen Wärmeleistung den tatsächlich auf das Strömungsmedium übertragenen Wärmestrom ermitteln zu können, ist zunächst noch eine Korrektur um Wärmeein- und/oder -ausspeichereffekte in die Komponenten der Verdampferheizfläche 4, insbesondere in die Metallmassen, vorgesehen. Dazu wird der genannte Kennwert für die vom Heizgas abgegebene Wärmeleistung zunächst einem Subtrahierglied 54 zugeführt, wo ein für die Wärmeein- oder -ausspeicherung in die Verdampferbauteile charakteristischer Korrekturwert abgezogen wird. Dieser wird von einem Funktionsglied 56 bereitgestellt. Dieses ist eingangsseitig seinerseits mit dem Ausgangswert eines weiteren Funktionsgliedes 58 beaufschlagt, indem ein mittlerer Temperaturwert für die Metallmassen der Verdampferheizfläche 4 ermittelt wird. Dazu ist das weitere Funktionsglied 58 eingangsseitig mit einem im Wasserspeicher 6 angeordneten Druckgeber 60 verbunden, so dass das weitere Funktionsglied 58 die mittlere Temperatur der Metallmassen anhand des Drucks des Strömungsmediums, z. B. durch Gleichsetzung mit der zu diesem Druck gehörigen Siedetemperatur, im Wasserspeicher 6 ermitteln kann.

Ausgangsseitig übergibt das Subtrahierglied 54 somit einen für die vom Heizgas abgegebene Wärmeleistung, vermindert um die in das Metall der Verdampferheizfläche 4 eingespeicherte Wärmeleistung, und somit einen für die an das Strömungsmedium abzugebende Wärmeleistung charakteristischen Kennwert.

Dieser Kennwert wird im Dividierglied 34 als Zähler verwendet, der dort durch einen Nenner geteilt wird, der einer im Hinblick auf den gewünschten Frischdampfzustand vorgegebenen Soll-Enthalpieerhöhung des Strömungsmediums in der Verdampferheizfläche 4 entspricht, so dass aus dieser Division oder diesem Verhältnis der Sollwert *Ṁ*ₛ für den Speisewassermassenstrom *Ṁ* gebildet werden kann. Zur Bereitstellung des Nenners, also des Kennwerts für die gewünschte Soll-Enthalpieerhöhung auf der Wasser-Dampf- oder Strömungsmediumsseite, ist das Dividierglied 34 eingangsseitig mit einem Subtrahierglied 70 verbunden. Dieses ist eingangsseitig mit einem von einem Funktionsglied 72 bereitgestellten Kennwert für den gewünschten Sollwert für die Enthalpie des Strömungsmediums am Verdampferaustritt beaufschlagt. Des Weiteren ist das Subtrahierglied 70 eingangsseitig mit einem von einem Funktionsmodul 74 bereitgestellten Kennwert oder Istwert für die aktuelle Enthalpie des Strömungsmediums am Verdampfereintritt beaufschlagt, der im Subtrahierglied 70 vom genannten Kennwert für den Sollwert der Enthalpie am Verdampferaustritt abgezogen wird. Eingangsseitig ist das Funktionsmodul 74 dabei zur Bildung des genannten Kennwerts für die Ist-Enthalpie am Verdampfereintritt mit dem Drucksensor 46 und mit einem Temperatursensor 76 verbunden. Durch die Differenzbildung im Subtrahierglied 70 wird somit die in Abhängigkeit vom gewünschten Frischdampfzustand in das Strömungsmedium in der Verdampferheizfläche 4 einzubringende Enthalpieerhöhung ermittelt, die als Nenner im Dividierglied 34 verwendet werden kann.

Der Zwangdurchlaufdampferzeuger 1 könnte für einen Betrieb im so genannten "Level Control Mode" ausgelegt sein, bei dem der Wasserstand im Wasserspeicher 6 geregelt wird, wobei an die dem der Verdampferheizfläche 4 nachgeschalteten Überhitzerheizflächen 8, 10, 12 ausschließlich Dampf weitergegeben wird, und das verdampferaustrittsseitig noch mitgeführte Wasser im Wasserspeicher 6 abgeschieden wird. Im Ausführungsbeispiel ist der Zwangdurchlaufdampferzeuger 1 aber für einen Betrieb im so genannten "Benson Control Modus" ausgelegt, bei dem eine Überspeisung des auch als Wasserabscheider vorgesehenen Wasserspeichers 6 und die vollständige Verdampfung des Strömungsmediums erst in den nachfolgenden Überhitzerheizflächen 8, 10, 12 möglich ist. Bei dieser Betriebsvariante wird das Funktionsglied 72, über das der Sollwert für die Enthalpie des Strömungsmediums am Verdampferaustritt ausgegeben werden soll, eingangsseitig einerseits mit dem vom Drucksensor 60 ermittelten Istwert für den Druck im Wasserabscheider 6 beaufschlagt. Weiterhin ist dem Funktionsmodul 72 eingangsseitig ein weiteres Funktionsmodul 90 vorgeschaltet, das anhand des vom Drucksensor 60 ermittelten Ist-Drucks im Wasserspeicher 6 anhand einer hinterlegten Funktionalität oder des gewünschten Frischdampfzustands einen geeigneten Sollwert für die Temperatur des Strömungsmediums im Wasserspeicher 6 ermittelt. Beispielsweise könnte für einen Betrieb der Anlage im "Benson Control Modus" als Sollwert für die Temperatur hierbei ein Temperaturwert hinterlegt sein, der der Sättigungstemperatur des Strömungsmediums beim ermittelten Druck zuzüglich einer vorgesehenen Mindestüberhitzung von beispielsweise 35 °C entspricht. Das Funktionsmodul 72 ermittelt aus diesem Sollwert für die Temperatur unter Berücksichtigung des aktuellen Druckwerts den genannten Sollwert für die Enthalpie des Strömungsmediums am Verdampferaustritt.

Im Ausführungsbeispiel wird dieser vom Funktionsmodul 72 bereitgestellte Sollwert, der im Wesentlichen an den Eigenschaften des Strömungsmediums als solches orientiert ist, anschließend in einem nachgeschalteten Addierglied 92 noch um einen weiteren Korrekturwert verändert. Dieser von einem Funktionsmodul 94 gelieferte weitere Korrekturwert berücksichtigt im Wesentlichen in der Art einer Trimmfunktion die Abweichung der aktuell festgestellten Frischdampftemperatur von der im Hinblick auf den gewünschten Frischdampfzustand eigentlich gewünschten Frischdampftemperatur. Eine derartige Abweichung kann sich insbesondere dadurch bemerkbar machen, dass bei zu hoher Frischdampftemperatur in den Einspritzkühlern 14, 16 Kühlbedarf entsteht und somit die Beaufschlagung der Einspritzkühler 14, 16 mit Kühlmedium erforderlich ist. Falls ein derartiger Massenstrom zu den Einspritzkühlern 14, 16 festgestellt wird, ist es Auslegungsziel des Funktionsmoduls 94, diesen Kühlbedarf von den Einspritzkühlern 14, 16 weg und hin zu einer erhöhten Speisewasserzufuhr zu verlagern. Bei einem dementsprechend festgestellten Kühlbedarf in den Einspritzkühlern 14, 16 wird dementsprechend im Funktionsmodul 94 die gewünschte Enthalpie des Strömungsmediums am Verdampferaustritt abgesenkt, um den Kühlbedarf zu minimieren. Andernfalls, also wenn eine zu niedrige Frischdampftemperatur festgestellt wird, wird über den vom Funktionsmodul 94 bereitgestellten Korrekturwert und dessen Addition im Addiermodul 92 der Enthalpie-Sollwert erhöht.

Zur Absicherung umfasst die Speisewasserdurchflussregelung 32 des Zwangdurchlaufdampferzeugers 1 noch eine nachgelagerte direkte Regelschleife, bei der in einem Funktionsmodul 100 anhand der Messwerte im Wasserspeicher 6 ein Istwert für die Enthalpie des Strömungsmediums am Verdampferaustritt ermittelt und in einem Differenziermodul 102 mit der gewünschten Enthalpie, also mit dem Soll-Enthalpiewert, verglichen wird. Durch die Differenzbildung im Differenziermodul 102 wird dabei die Soll-Ist-Abweichung festgestellt, die über einen nachgeschalteten Regler 104 in einem Addierglied 106 dem vom Dividierglied 34 bereitgestellten Sollwert für den Speisewassermassenstrom überlagert wird. Diese Überlagerung geschieht geeignet zeitlich verzögert und gedämpft, so dass dieser Regeleingriff lediglich im Bedarfsfall, also bei zu grober Regelabweichung, eingreift.

Zur noch weiteren Verbesserung der Regelungsqualität bei der prädiktiven Massenstromregelung des Zwangdurchlaufdampferzeugers 1 ist bei der Erstellung des Sollwerts *Ṁ*ₛ für den Speisewassermassenstrom *Ṁ* zudem noch die Berücksichtigung eines Korrekturwerts K vorgesehen, der die zeitliche Ableitung von Enthalpie- und Dichtewerten des Strömungsmediums an geeigneten Messstellen repräsentiert. Dazu wird der vom Addierglied 106 ausgegebene Zwischenwert einem weiteren Addierglied 108 zugeführt, wo ihm der Korrekturwert K überlagert wird.

Zur Ermittlung der Beiträge oder Summanden für den Korrekturwert K ist dabei einerseits ein zur Ermittlung eines Dichtekennwerts für das Strömungsmedium am Eintritt der Vorwärmerheizfläche 2 vorgesehenes Funktionsmodul 110 eingangsseitig mit einem im Eintrittsbereich der Vorwärmerheizfläche 2 angeordneten Drucksensor 112 und einem ebenfalls im Eintrittsbereich der Vorwärmerheizfläche 2 angeordneten Temperatursensor 114 verbunden. Anhand der von diesen Sensoren gelieferten Messwerte ermittelt das Funktionsmodul 110 einen Kennwert für die Dichte des Fluids oder Strömungsmediums im Eintrittsbereich der Vorwärmerheizfläche 2, der an ein nachgeschaltetes Addierglied 116 ausgegeben wird. Ein weiteres Funktionsmodul 118 ist seinerseits eingangsseitig mit dem Drucksensor 48 und dem Temperatursensor 76 verbunden und ermittelt aus den von diesen gelieferten Messwerten einen Dichtekennwert für das Fluid oder Strömungsmedium austrittsseitig der Vorwärmerheizfläche 2. Dieser weitere Dichtekennwert wird vom Funktionsmodul 118 ebenfalls an das Addierglied 116 ausgegeben.

Das Addierglied 116 gibt seinerseits die aus den eingehenden Dichtekennwerten gebildete Summe an ein nachgeschaltetes Dividierglied 120 aus, in dem die genannte Summe durch den Faktor 2 als Nenner dividiert wird. Ausgangsseitig stellt das Dividierglied 120 somit einen für die mittlere Fluid- oder Speisewasserdichte in der Vorwärmerheizfläche 2 charakteristischen Kennwert bereit. Dieser wird einem nachgeschalteten Differenzierglied 122 zugeführt.

Das Differenzierglied 122 ist als so genanntes "Derivative-Element" oder "DT1-Glied" ausgestaltet und liefert als Ausgangswert einen für die zeitliche Ableitung des vom Dividierglied 120 gelieferten Dichtekennwerts des Fluids oder Strömungsmediums charakteristischen Kennwert, der an ein nachgeschaltetes Subtrahierglied 124 ausgegeben wird.

Zusätzlich ist ein weiteres Differenzierglied 126 vorgesehen, das eingangsseitig mit dem vom Funktionsmodul 74 erzeugten für die Ist-Enthalpie am Verdampfereintritt charakteristischen Kennwert beaufschlagt wird. Das Differenzierglied 126, das seinerseits ebenfalls als so genanntes "Derivative-Element" oder "DT1-Glied" ausgeführt ist, liefert somit einen für die zeitliche Ableitung der Enthalpie am Eingang der Verdampferheizfläche 4 charakteristischen Kennwert.

Im Subtrahierglied 124 wird dieser Kennwert vom vom Differenzierglied 122 gelieferten, für die zeitliche Ableitung der Dichtewerte des Strömungsmediums charakteristischen Kennwert abgezogen. Damit liefert das Subtrahierglied 124 einen Ausgangswert, der linear aus Beiträgen für die zeitliche Ableitung der Dichte des Strömungsmediums am Eintritt der Vorwärmheizfläche 2, der zeitlichen Ableitung der Dichte des Strömungsmediums am Austritt der Vorwärmerheizfläche 2 und der zeitlichen Ableitung der Enthalpie des Strömungsmediums am Eingang der Verdampferheizfläche 4 zusammengesetzt ist. In diesem aus den genannten Anteilen gebildeten Korrekturwert sind somit über die genannten zeitlichen Ableitungen fluidseitige Ein- oder Ausspeichereffekte in der Vorwärmerheizfläche 2 und/oder in der Verdampferheizfläche 4 bei transienten Vorgängen oder Laständerungen berücksichtigt. Dieser Korrekturwert wird im Addierglied 108 dem Sollwert *Ṁ*ₛ für die Speisewassermassenstromdichte überlagert.

## Patentansprüche

1. Verfahren zum Betreiben eines Durchlaufdampferzeugers mit einer Anzahl von Heizflächen (2,4), bei dem einer Vorrichtung zum Einstellen des Speisewassermassenstroms (*Ṁ*) ein Sollwert (*Ṁ*ₛ) für den Speisewassermassenstrom (*Ṁ*) zugeführt wird, wobei bei der Erstellung des Sollwerts (*Ṁ*ₛ) für den Speisewassermassenstrom (*Ṁ*) ein für die zeitliche Ableitung der Enthalpie oder der Dichte des Strömungsmediums am Eingang einer oder mehrerer der Heizflächen (2, 4) charakteristischer Korrekturwert (K) berücksichtigt wird.

2. Verfahren nach Anspruch 1, bei dem der Korrekturwert anhand der Summe von für die zeitliche Ableitung der Dichte des Strömungsmediums am Eingang einerseits und am Ausgang andererseits einer Heizfläche (2, 4) charakteristischen Kennwerten erstellt wird.

3. Verfahren nach Anspruch 2, bei dem die zeitliche Ableitung der Dichte des Strömungsmediums in einer Vorwärmerheizfläche (2) ausgewertet wird.

4. Verfahren nach einem der Ansprüche 1 bis 3, bei dem die zeitliche Ableitung jeweils über ein Differenzierglied (122, 126) ermittelt wird.

5. Verfahren nach Anspruch 4, bei dem ein einer Vorwärmerheizfläche (2) zugeordnetes Differenzierglied (122) mit einem dem Gesamtvolumen des Strömungsmediums in der Vorwärmerheizfläche (2) entsprechenden Verstärkungsfaktor beaufschlagt wird.

6. Verfahren nach Anspruch 4 oder 5, bei dem ein einer Vorwärmerheizfläche (2) zugeordnetes Differenzierglied (122) mit einer etwa der Hälfte der Durchlaufzeit des Strömungsmediums durch die Vorwärmerheizfläche (2) entsprechenden Zeitkonstante beaufschlagt wird.

7. Verfahren nach einem der Ansprüche 1 bis 6, bei dem der Sollwert (*Ṁ*ₛ) für den Speisewassermassenstrom (*Ṁ*)anhand des Verhältnisses aus dem aktuell in der Verdampferheizfläche (4) vom Heizgas auf das Strömungsmedium übertragenen Wärmestrom einerseits und einer im Hinblick auf den gewünschten Frischdampfzustand vorgegebenen Soll-Enthalpieerhöhung des Strömungsmediums in der Verdampferheizfläche (4) andererseits vorgegeben wird, wobei der vom Heizgas auf das Strömungsmedium übertragene Wärmestrom unter Berücksichtigung eines für die aktuelle Temperatur des Heizgases am Verdampfereintritt charakteristischen Temperaturkennwerts und eines für den aktuellen Massenstrom des Heizgases charakteristischen Massenstromkennwerts ermittelt wird.

8. Verfahren nach Anspruch 7, bei dem als charakteristischer Temperaturkennwert und/oder als charakteristischer Massenstromkennwert jeweils ein aktueller Messwert berücksichtigt wird.

9. Verfahren nach Anspruch 7 oder 8, bei dem der vom Heizgas auf das Strömungsmedium übertragene Wärmestrom anhand der Enthalpiedifferenz des Heizgases zwischen Verdampfereintritt und Verdampferaustritt ermittelt wird.

10. Zwangdurchlaufdampferzeuger (1) mit einer Verdampferheizfläche (4) und mit einer Vorrichtung zum Einstellen des Speisewassermassenstroms (*Ṁ*), die anhand eines Sollwerts (*Ṁ*ₛ) für den Speisewassermassenstrom (*Ṁ*) geführt ist, wobei eine zugeordnete Speisewasserdurchflussregelung (32) zur Vorgabe des Sollwerts (*Ṁ*ₛ) anhand des Verfahrens nach einem der Ansprüche 1 bis 9 ausgelegt ist.

11. Zwangdurchlaufdampferzeuger (1) nach Anspruch 10, der heizgasseitig mit dem Abgas aus einer zugeordneten Gasturbinenanlage beaufschlagt ist.
